# EUROPÄISCHE PATENTSCHRIFT

(11) **EP 0 813 661 B1**
(45) Veröffentlichungstag und Bekanntmachung des Hinweises auf die Patenterteilung: **23.12.1998**
(21) Anmeldenummer: 96902953.7
(22) Anmeldetag: 31.01.1996
(51) Int. Cl.: F16K 11/078

(54) **STEUERSCHEIBENPAKET**
DISC CAM SET
BLOC DE DISQUES DE COMMANDE

(30) Priorität: 10.03.1995 DE 19508362
(43) Veröffentlichungstag der Anmeldung: 29.12.1997
(73) Patentinhaber: IDEAL-STANDARD GMBH, 53121 Bonn (DE)
(72) Erfinder: BERGMANN, Konrad, D-54338 Schweich (DE)
(74) Vertreter: Gesthuysen, Hans Dieter, Dipl.-Ing.
(86) Internationale Anmeldenummer: EP9600389
(87) Internationale Veröffentlichungsnummer: WO9628675

(56) Entgegenhaltungen:
- EP-A- 0 188 992
- FR-A- 2 500 564
- GB-A- 2 123 530
- GB-A- 2 136 925

## Beschreibung

Die Erfindung betrifft ein Ventilscheibenpaket eines Steuerventils einer sanitären Einhebel-Mischarmatur, mit wenigstens einer eine Kaltwasserzutlußöffnung und eine Heißwasserzuflußöffnung aufweisenden ersten Ventilscheibe und einer gegenüber der ersten Ventilscheibe bewegbaren, eine Mischwassersteueröffnung aufweisenden zweiten Ventilscheibe, wobei durch Bewegen der zweiten Ventilscheibe gegenüber der ersten Ventilscheibe zumindest zur Veränderung der Mischwassertemperatur unterschiedliche Einströmquerschnitte der Kaltwasserzuflußöffnung und der Heißwasserzuflußöffnung über die Mischwassersteueröffnung einstellbar sind, wobei die zweite Ventilscheibe gegenüber der ersten Ventilscheibe um die mittelachse der ersten Ventilscheibe verdrehbar ist, wobei wenigstens eine in die Mischwassersteueröffnung hineinragende Nocke vorgesehen ist, die bei Verstellung der zweiten Ventilscheibe ausgehend von der Mittelstellung zumindest im Bereich der Mittelstellung die eine Zuflußöffnung stärker überdeckt als die andere Zuflußöffnung.

Ein derartiges Ventilscheibenpaket ist bereits aus der FR - A - 2 500 564 bekannt. Bei diesem bekannten Ventilscheibenpaket geht es darum, eine Komfortzone mit einem relativ großen Drehwinkelbereich zu erzielen. Zu diesem Zweck ist vorgesehen, daß der Querschnitt des Einlaßdurchlasses der bewegbaren Ventilscheibe in seiner Längsmitte durch eine von der Steuerkantenseite ausgehenden Nocke verengt ist, deren Basislänge größer ist als der gegenseitige Abstand der beiden Zuflußdurchgänge der feststehenden Ventilscheibe. Das bekannte Ventilscheibenpaket hat jedoch den Nachteil. daß Temperaturfehler beim Betätigen auftreten können.

Der Erfindung liegt damit die Aufgabe zugrunde, ein Ventilscheibenpaket der zuvor genannten Art für eine Einhebel-Mischarmatur zur Verfügung zu stellen, bei dem Temperaturfehler beim Betätigen möglichst nicht auftreten.

Die zuvor genannte Aufgabe ist bei einem Ventilscheibenpaket der eingangs genannten Art dadurch gelöst, daß die Höhe der Nocke zumindest der Breite der Kaltwasserzuflußöffnung und/oder der Heißwasserzuflußöffnung entspricht, so daß die Nocke in maximaler Öffnungsstellung die gesamte Breite der Kaltwasserzuflußöffnung und/oder der Heißwasserzuflußöffnung überdeckt. Beim Zustandekommen der vorliegenden Erfindung ist zunächst einmal festgestellt worden, daß es beim Öffnen und/oder Schließen des bekannten Ventilscheibenpakets zu Temperaturfehlern kommen kann. Dabei ist dann auch festgestellt worden, daß die Ursache der Temperaturfehler in der Ausbildung der bekannten Nocke liegt. Wird beispielsweise bei der in Fig. 15 dargestellten Ausführungsform der FR - A - 2 500 564 die Temperaturstellung beibehalten und die bewegliche Ventilscheibe zur Mengenverminderung verschoben, so verringert sich die Kaltwassermenge dann schlagartig, wenn die untere Steuerkante der Nocke die Kaltwasserzuflußöffnung vollständig überdeckt. Demgegenüber bleibt die Warmwassermenge gleich, so daß statt des erwünschten vergleichsweise kalten Mischwassers nun ein vergleichsweise warmes Mischwassers erzielt wird. Natürlich wirkt sich dies auch in umgekehrter Weise aus, wenn nun ausgehend von der zuletzt genannten Stellung eine größere Menge an Mischwasser gewünscht ist, also die bewegliche Ventilscheibe wieder zur Mengenerhöhung in entgegengesetzter Richtung verschoben wird. Sobald die untere, freie Steuerkante der Nocke die Kaltwasserzuflußöffnung freigibt, wird vergleichsweise mehr Kaltwasser bei gleichbleibender Warmwassermenge geliefert, so daß die Mischwassertemperatur plötzlich absinkt. In ähnlicher Weise wirkt sich dies natürlich aus, wenn sich die Nocke im Bereich der Warmwasseröffnung befindet.

Um diese Temperaturfehler beim Öffnen und/oder Schließen auszuschalten, ist man dann auf die erfindungsgemäße Lösung mit der im Patentanspruch 1 angegebenen Ausgestaltung der Nocke gekommen. Durch die erfindungsgemäße Lösung ist sichergestellt. daß die Nocke auch in maximaler Öffnungsstellung immer den vollständigen Bereich der jeweiligen Zuflußöffnung abdeckt. Es kann also bei der Mengenverstellung nicht vorkommen, daß sich "plötzlich" eine größere Durchflußmenge aus der einen oder der anderen Zuflußöffnung ergibt.

Die Erfindung betrifft weiterhin ein Ventilscheibenpaket eines Steuerventils einer sanitären Einhebel-Mischarmatur, mit wenigstens einer eine Kaltwasserzuflußöffnung und eine Heißwasserzuflußöffnung aufweisenden ersten Ventilscheibe und einer gegenüber der ersten Ventilscheibe bewegbaren, eine Mischwassersteueröffnung aufweisenden zweiten Ventilscheibe, wobei durch Bewegen der zweiten Ventilscheibe gegenüber der ersten Ventilscheibe zumindest zur Veränderung der Mischwassertemperatur unterschiedliche Einströmquerschnitte der Kaltwasserzuflußöffnung und der Heißwasserzuflußöffnung über die Mischwassersteueröffnung einstellbar sind. wobei wenigstens eine in die Mischwassersteueröffnung hineinragende Nocke vorgesehen ist, die bei Verstellung der zweiten Ventilscheibe die eine Zuflußöffnung stärker iiberdeckt als die andere Zuflußöffnung.

Ein derartiges Ventilscheibenpaket ist ebenfalls bereits aus der FR - A - 2 500 564 bekannt. Zuvor ist bereits darauf hingewiesen worden, daß ein Nachteil dieses bekannten Ventilscheibenpakets, dessen zweite Ventilscheibe um die Mittelachse der ersten Ventilscheibe bzw. den Kartuschenmittelpunkt verdrehbar ist, darin besteht, daß Temperaturfehler beim Betätigen auftreten können.

Aufgabe der vorliegenden Erfindung ist es daher auch, ein Ventilscheibenpaket der zuvor genannten Art zur Verfügung zu stellen, das beim Betätigen nicht um den Kartuschenmittelpunkt dreht und bei dem Temperaturfehler beim Betätigen möglichst nicht auftreten.

Die zuvor genannte Aufgabe wird bei einem Ventilscheibenpaket der zuvor genannten Art dadurch gelöst, daß die zweite Ventilscheibe in der Offen- und Geschlossen-Stellung um einen außermittigen Drehpunkt der zweiten Ventilscheibe verdrehbar ist und daß die Nocke durch einen Kreisbogen um den Drehpunkt der zweiten Ventilscheibe begrenzt wird.

Durch die zuvor genannte erfindungsgemäße Lösung wird nun einerseits durch die Nocke der Komfortzone ein relativ großer Drehwinkelbereich zugeordnet, während andererseits durch die besondere Ausgestaltung der Nocke auftretende Temperaturfehler verringert werden.

Ausführungsbeispiele der vorliegenden Erfindung ergeben sich aus der nachfolgenden Zeichnung.

Es zeigt
- Fig. 1: eine Draufsicht auf eine erfindungsgemäße bewegbare Ventilscheibe eines Ventilscheibenpakets,
- Fig. 2: eine Draufsicht auf eine gegenüber der in Fig. 1 dargestellten Ventilscheibe feste Ventilscheibe des Ventilscheibenpakets,
- Fig. 3-6: Ansichten von schematischen Darstellungen eines bekannten Ventilscheibenpakets in unterschiedlichen Einstellungen,
- Fig. 7-10: Ansichten eines schematisch dargestellten, erfindungsgemäßen Ventilscheibenpakets in unterschiedlichen Einstellungen. entsprechend den Einstellungen gemäß den Fig. 3 bis 6,
- Fig. 11: eine Draufsicht auf eine andere Ausführungsform einer erfindungsgemäßen bewegbaren Ventilscheibe eines Ventilscheibenpakets,
- Fig. 12: eine Draufsicht auf eine feste Ventilscheibe zum Zusammenwirken mit der in Fig. 11 dargestellten Ventilscheibe,
- Fig. 13-16: Ansichten eines bekannten, schematisch dargestellten Ventilscheibenpakets in verschiedenen Einstellungen und
- Fig. 17-20: Ansichten eines erfindungsgemäßen, schematisch dargestellten Ventilscheibenpakets in verschiedenen Einstellungen, entsprechend den Einstellungen in den Fig. 13 bis 16.

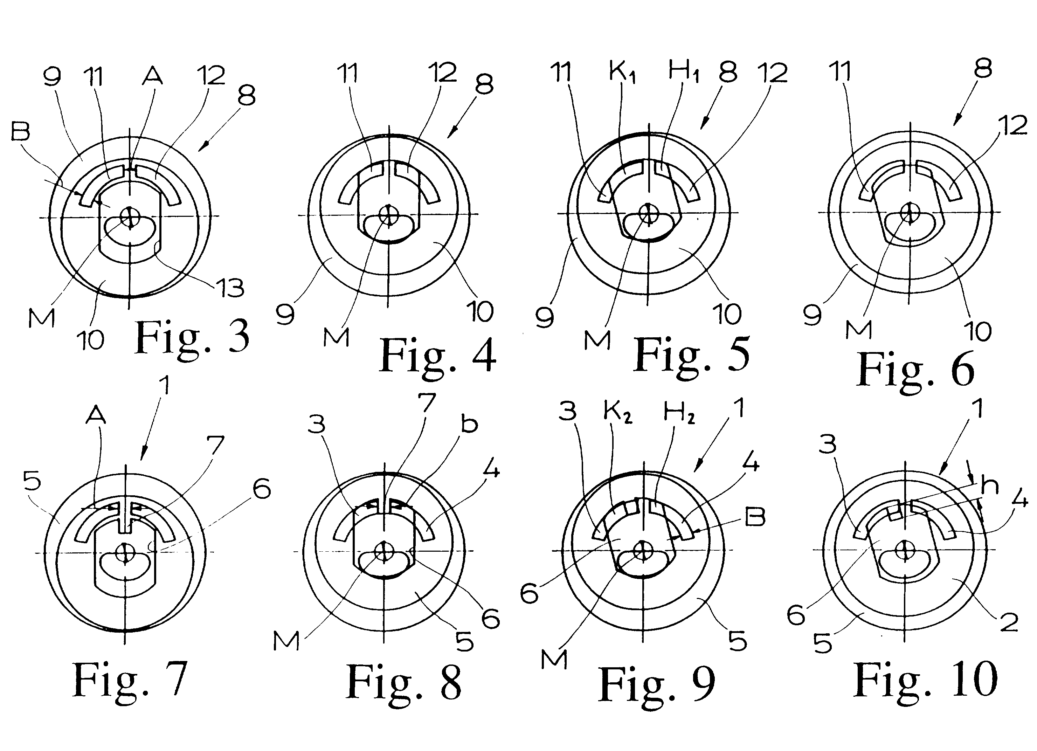

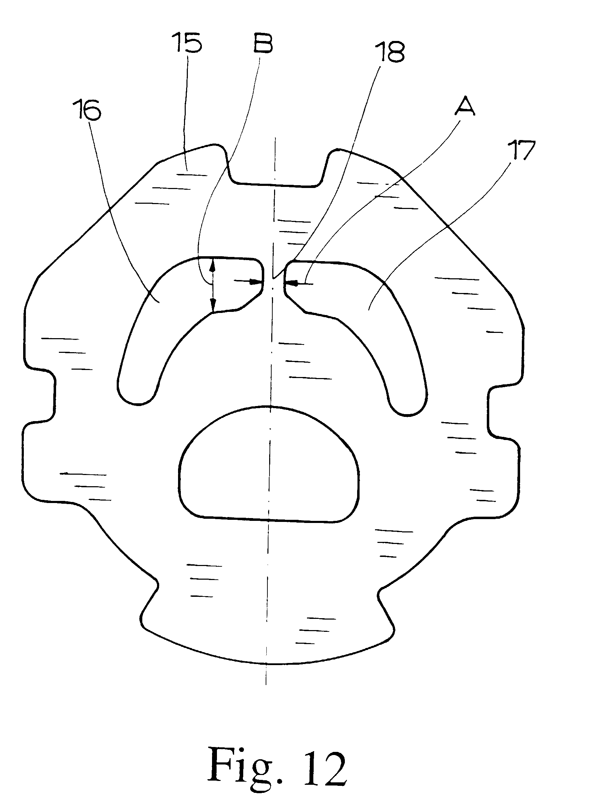

In den Fig. 7 bis 10 einerseits und 17 bis 20 andererseits ist jeweils ein erfindungsgemäßes Ventilscheibenpaket 1, 14 eines nicht dargestellten Steuerventils einer ebensowenig dargestellten sanitären Einhebel-Mischarmatur gezeigt. Das in den Figuren 7 bis 10 dargestellte Ventilscheibenpaket 1 weist vorliegend eine erste Ventilscheibe 2 auf. Eine andere Ausführungsform der ersten Ventilscheibe 15 ist in Fig. 12 dargestellt.

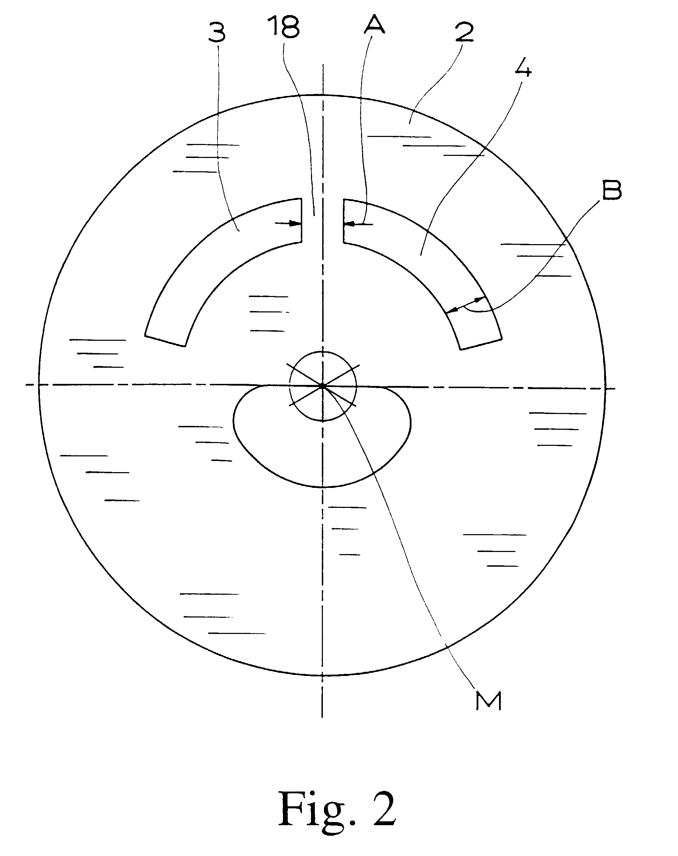

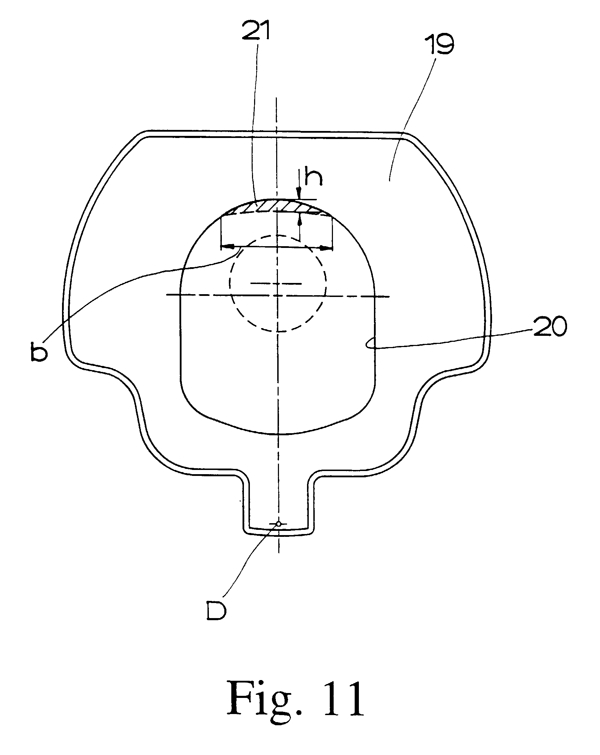

Die in Fig. 2 dargestellte erste Ventilscheibe 2 weist eine Kaltwasserzuflußöffnung 3 und eine Heißwasserzuflußöffnung 4 auf. Weiterhin weist das Ventilscheibenpaket 1 eine zweite Ventilscheibe 5 auf, die mit einer Mischwassersteueröffnung 6 versehen ist. Eine andere Ausführungsform der zweiten Ventilscheibe 19 ist in Figur 11 dargestellt.

Vorliegend handelt es sich bei der ersten Ventilscheibe um eine feststehende Ventilscheibe, auf der die zweite Ventilscheibe 5 über einen entsprechenden Mechanismus bewegbar ist. Die erste Ventilscheibe 2 dient also als Ventilsitzscheibe für die zweite Ventilscheibe 5, über die vorliegend die Temperatur- und Mengeneinstellung erfolgt. Dies erfolgt über entsprechende Bewegungen der zweiten Ventilscheibe 5 gegenüber der ersten Ventilscheibe 2, wobei unterschiedliche Einströmquerschnitte der Kaltwasserzuflußöffnung und der Heißwasserzuflußöffnung 4 über die Mischwassersteueröffnung 6 einstellbar sind.

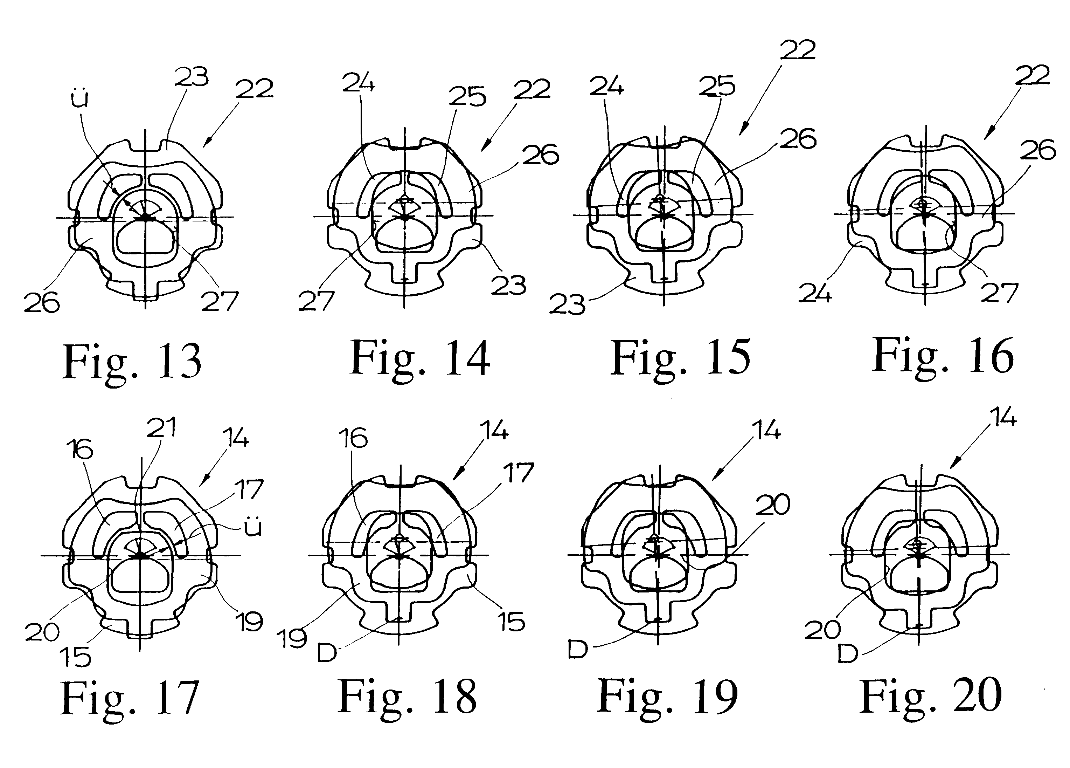

Das in den Fig. 17 bis 20 dargestellte Ventilscheibenpaket 14 unterscheidet sich nicht grundsätzlich von dem zuvor beschriebenen. Hier sind ebenfalls eine erste Ventilscheibe 15 und eine zweite Ventilscheibe 19 vorgesehen. Die erste Ventilscheibe 15 weist eine Kaltwasserzuflußöffnung 16 und eine Heißwasserzuflußöffnung 17 auf. Die zweite Ventilscheibe weist wiederum eine Mischwassersteueröffnung 20 auf.

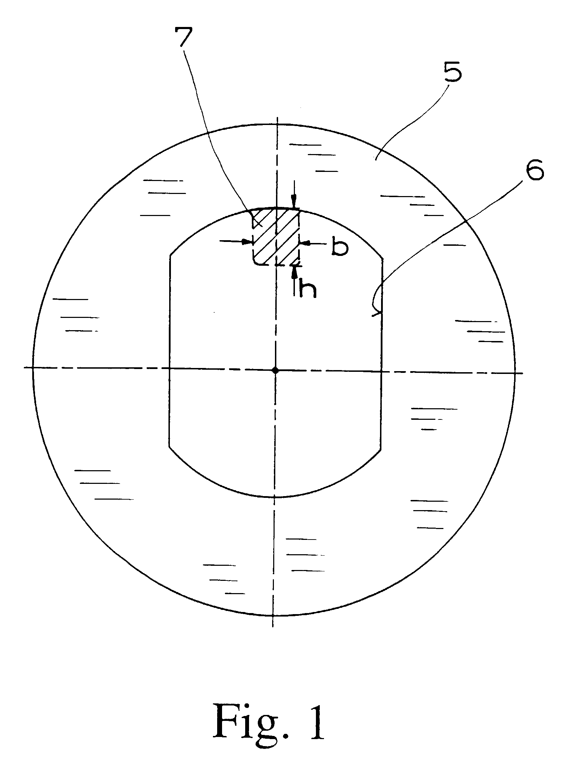

Für beide Ausführungsformen - Fig. 1, 2 und 7 bis 10 einerseits und Fig. 11, 12 und 17 bis 20 andererseits - gilt, daß an der zweiten Ventilscheibe 5, 19 eine Nocke 7, 21 vorgesehen ist, die den ursprünglichen Gesamtquerschnitt der Mischwassersteueröffnung 6, 20 verringert. Die Nocke 7, 21, die in den Figuren 1 und 11 gestrichelt dargestellt ist, wirkt beim Verstellen der zweiten Ventilscheibe 5, 19, je nachdem, in welche Richtung verstellt wird, mit der Kaltwasserzuflußöffnung 3, 16 und/oder der Heißwasserzuflußöffnung 4, 17 zusammen. Auf das Zusammenwirken wird im folgenden näher eingegangen. Hierzu darf zunächst auf die Figuren 3 bis 10 hingewiesen werden.

In den Figuren 3 bis 6 ist ein bekanntes Ventilscheibenpaket 8 dargestellt. Dieses weist eine erste feste Ventilscheibe 9 und eine zweite, darauf bewegbare Ventilscheibe 10 auf. In der ersten Ventilscheibe 9 sind schlitzartig ausgebildete Zuflußöffnungen 11, 12 für Kalt- und Heißwasser vorgesehen. Die Zuflußöffnungen 11, 12 sind kreisbogenartig angeordnet und über einen Steg mit dem Abstand A voneinander beabstandet. Die Zuflußöffnungen 11, 12 haben jeweils eine Breite B.

Die zweite Ventilscheibe 10 weist eine Mischwassersteueröffnung 13 auf, die einen erheblich größeren Querschnitt hat als die Zuflußöffnungen 11, 12. Zur Temperatursteuerung des Ventilscheibenpakets 8 ist die zweite Ventilscheibe 10 gegenüber der ersten Ventilscheibe 9 verdrehbar, während die Mengensteuerung über eine Verschiebung der zweiten Ventilscheibe 10 gegenüber der ersten Ventilscheibe 9 erfolgt. Bei der in den Figuren 3 bis 6 dargestellten Ausführungsform dreht die zweite Ventilscheibe 10 zur Temperatursteuerung in der Offen- und Geschlossenstellung um die Mittelachse M der ersten Ventilscheibe 9.

Bezüglich der zuvorgenannten Ausbildung des bekannten Ventilscheibenpakets 8 unterscheidet sich das erfindungsgemäße Ventilscheibenpaket 1, das in den Figuren 7 bis 10 dargestellt ist, nicht. Der Unterschied besteht vorliegend darin, daß die aus der FR - A - 2 500 564 an sich bekannte Nocke 7 in die Mischwassersteueröffnung 6 hineinragt. Die Nocke 7 ist dabei derart ausgebildet, daß ihre Breite b dem Abstand A des Steges 18 zwischen der Kaltwasserzuflußöffnung 3 und der Heißwasserzuflußöffnung 4 entspricht. Weiterhin entspricht die Höhe h der Nocke 7 der Breite B der schlitzförmigen Zuflußöffnungen 3, 4.

In den Figuren 3 und 7 ist jeweils die Geschlossen-Stellung des Ventilscheibenpakets 1, 8 dargestellt. In diesem Zustand fließt kein Wasser. Auch die Nocke 7 übt keinen Einfluß in diesem Zustand aus.

In den Figuren 4 und 8 ist jeweils die maximale Offen-Stellung des Ventilscheibenpakets 1, 8 dargestellt. Die bewegliche Ventilscheibe 5, 10 befindet sich in Mittelstellung, in der die Einströmquerschnitte der Kaltwasserzuflußöffnung 3, 11 und der Heißwasserzuflußöffnung 4, 12 etwa gleich groß sind. Die Nocke 7 überdeckt in der Mittelsiellung gänzlich den Steg 18 zwischen der Kaltwasserzuflußöffnung 3 und der Heißwasserzuflußöffnung 4. Insgesamt beeinflußt auch in dieser Stellung die Nocke 7 weder die Mischwassertemperatur noch die Mischwassermenge.

In den Figuren 5 und 9 ist die bewegbare, zweite Ventilscheibe 5, 10 in maximaler Offen-Stellung um 15° in Richtung der Kaltwasserzuflußöffnung 3, 11 verschoben worden. In diesem Zustand wird bei dem bekannten Ventilscheibenpaket 8 von der Kaltwasserzuflußöffnung ein Einlaufquerschnitt K₁, von der Heißwasserzuflußöffnung 12 ein Einlaufquerschnitt H₁ über die Mischwassersteueröffnung 13 freigegeben. Bei dem erfindungsgemäßen Ventilscheibenpaket 1 wird dementsprechend ein Einströmquerschnitt K₂ der Kaltwasserzuflußöffnung 3 und ein Einströmquerschnitt H₂ der Heißwasserzuflußöffnung 4 freigegeben. Während die Einströmquerschnitte H₁ und H₂ gleich groß sind. ist der Einströmquerschnitt K₂ gegenüber dem Einströmquerschnitt K₁ verringert und zwar um die Fläche der Nocke 7, soweit die Nocke 7 die Kaltwasserzuflußöffnung 3 überdeckt.

Bei Versuchen wurde festgestellt, daß sich bei gegebenen Bedingungen (gleiche Drücke, Temperatur des Kaltwassers 15° C, Temperatur des Heißwassers 65° C) bei der in Figur 5 dargestellten Ausführungsform mit bekanntem Ventilscheibenpaket 8 eine Temperaturänderung von 11,4 K gegenüber der Mittelstellung ergibt. während sich bei dem erfindungsgemäßen Ventilscheibenpaket 1 mit Nocke 7 in der entsprechenden Stellung gemäß Fig. 9 lediglich eine Temperaturänderung von 7,5 K ergibt, die Temperaturänderung also ca. 1,5 mal geringer ist. In den Figuren 6 und 10 ist eine den Figuren 5 und 9 vergleichbare Stellung dargestellt, wobei lediglich die Menge des Mischwassers verringert ist. Der Einfluß der Nocke 7 auf die Temperaturänderung ist ähnlich wie bei der in Figur 9 dargestellten Stellung.

Insgesamt ist festgestellt worden, daß in der direkten Umgebung der Mittelstellung mit der Nocke 7 die Empfindlichkeit der Temperaturänderung um den Faktor 2 verbessert werden kann. In diesem Bereich wird jeweils bei Verdrehung der zweiten Ventilscheibe 5 nur ein Einströmquerschnitt verkleinert, während der andere Einströmquerschnitt solange flächengleich bleibt, solange sich die Nocke 7 noch im Bereich des Steges 18 zwischen der Kaltwasserzuflußöffnung 3 und der Heißwasserzuflußöffnung 4 befindet.

Obwohl die Breite b der Nocke 7 vorliegend dem Abstand A des Steges 18 entspricht, versteht es sich, daß die Breite b der Nocke 7 auch kleiner sein kann. Allerdings sollte die Breite b der Nocke 7 auch nicht viel größer als der Abstand A sein, da sich andernfalls erst nach einem relativ großem Verschwenken des Betätigungsorgans und damit der zweiten Ventilscheibe 7 eine Temperaturverstellung ergibt. Wesentlich ist nun, daß die Höhe h der Nocke 7 mindestens der Breite B der schlitzförmigen Zuflußöffnungen 3, 4 entspricht. Andernfalls besteht bei dem Ventilscheibenpaket 1 mit Rotation der zweiten Ventilscheibe 5 um die Mittelachse M der ersten Ventilscheibe 2 die Gefahr, daß ein Temperaturfehler beim Schließen auftritt.

In den Figuren 17 bis 20 ist eine Ausführungsform dargestellt, bei der die zweite Ventilscheibe 19 zur Temperatursteuerung in der Offen- und Geschlossenstellung um einen außermittigen Scheibendrehpunkt D dreht. Auch bei dieser Ausführungsform weist das erfindungsgemäße Ventilscheibenpaket 14, das in den Figuren 17 bis 20 in verschiedenen Stellungen dargestellt ist, eine erste Ventilscheibe 15 mit Kaltwasserzuflußöffnung 16 und Heißwasserzuflußöffnung 17 auf. Obwohl die Zuflußöffnungen 16, 17 auch bei dieser Ausführungsform schlitzartig ausgebildet und über einen Steg 18 voneinander beabstandet sind. haben sie keine kreisabschnittsförmige Ausbildung.

Wie bereits eingangs erwähnt, weist das Ventilscheibenpaket 14 neben der ersten Ventilscheibe 15 die zweite Ventilscheibe 19 auf, die wiederum mit der Mischwassersteueröffnung 20 versehen ist. Gestrichelt dargestellt ist vorliegend die Nocke 21. Gegenüber dem ursprünglichen Gesamtquerschnitt der Mischwassersteueröffnung 20 ist dieser um die Fläche der Nocke 21 verringert.

Bei dem in den Figuren 17 bis 20 dargestellten Ausführungsbeispiel handelt es sich um ein Ventilscheibenpaket 14, das von einem Hebelmechanismus mit Kugelkopf angetrieben wird. Die Verschwenkung der zweiten Ventilscheibe 19 erfolgt dabei um den außermittigen Drehpunkt D der zweiten Ventilscheibe 19. Bei dieser Ausführungsform ist die Breite b der Nocke 21 größer als die Breite des Steges 18, d. h. grösser als der Abstand A zwischen der Kaltwasserzuflußöffnung 16 zur Kaltwasserzuflußöffnung 17. Die Höhe h der Nocke 21 ist vorliegend kleiner als die Breite B der Zuflußöffnung 16, 17. Die Höhe h der Nocke 21 entspricht vorliegend einer Überdekkung Ü zwischen der ersten Ventilscheibe 15 und der zweiten Ventilscheibe 19 in der Geschlossen-Stellung, die in den Figuren 13 und 17 dargestellt ist. Die Nocke 21 selbst wird durch einen Kreisbogen um den Drehpunkt D der zweiten Ventilscheibe 19 begrenzt.

In den Figuren 13 bis 16 ist ein bekanntes Ventilscheibenpaket 22 dargestellt, das dem erfindungsgemäßen, in den Figuren 17 bis 20 dargestellten Ventilscheibenpaket 14 im wesentlichen entspricht. Das bekannte Ventilscheibenpaket 22 weist eine feste erste Ventilschejbe 23 mit Zuflußöffnungen 24, 25 für Kaltwasser und Heißwasser auf, während die zweite, bewegliche Ventilscheibe 26 die Mischwassersteueröffnung 27 aufweist. In Fig. 13 ist dabei die Geschlossen-Stellung dargestellt, wobei sich die erste Ventilscheibe 23 und die zweite Ventilscheibe 26 um den Betrag Ü überdecken. In Figur 14 ist die maximale Offen-Stellung in Mittelstellung dargestellt, während in Figur 15 die zweite Ventilscheibe 26 zur Einlauföffnung 14 um etwa 15° verschwenkt ist. In Figur 16 ist eine der Figur 15 entsprechende Stellung gezeigt, bei der jedoch die Mischwassermenge verringert ist.

Neben der Nocke 21 unterscheidet sich das erfindungsgemäße Ventilscheibenpaket 14 vom bekannten Ventilscheibenpaket 22 noch dahingehend, daß der innere Rand der Kaltwasserzuflußöffnung 16 und der Heißwasserzuflußöffnung 17 zumindest teilweise an die Form der Nocke 21 dahingehend angepaßt ist, daß die Überdeckung Ü auch bei dem erfindungsgemäßen Ventilscheibenpaket 14 in Geschlossen-Stellung etwa gleich ist. Außerdem sind die einander zugewandten Enden der Zuflußöffnungen 16, 17 im unteren Bereich nicht, wie beim Stand der Technik, gerundet, sondern dachförmig angeschrägt.

Auch hinsichtlich des erfindungsgemäßen Ventilscheibenpakets 14 sind im Vergleich zum bekannten Ventilscheibenpaket 22 Versuche bezüglich der Temperatur- und Mengenverstellung durchgeführt worden. Hier ergibt sich beispielsweise beim Stand der Technik bei Verstellung von der in Figur 14 dargestellten Stellung in die in Figur 15 dargestellte Stellung eine Temperaturänderung von 10 K. Bei Verstellung des erfindungsgemäßen Ventilscheibenpakets 14 aus der in Figur 18 dargestellten Stellung in die in Figur 19 dargestellte Stellung ergibt sich lediglich eine Temperaturänderung von 9 K. Der Temperaturfehler beim Schließen auf ca. 15 % Querschnitt beträgt beim bekannten Ventilscheibenpaket 22 ungefähr 6 K, beim erfindungsgemäßen Ventilscheibenpaket 14 mit Nocke 21 nur etwa 2 bis 3 K. Diese Erscheinung zeigt sich bei anderen Winkelstellung des Mischers analog.

Es kann somit festgestellt werden, daß sich bei dem erfindungsgemäßen Ventilscheibenpaket 14, das von einem Hebelmechanismus mit Kugelkopf angetrieben wird, die Nocke 21 zur Erweiterung der Komfortzone genutzt werden kann. Die Ausbildung der Nocke 21 ermöglicht hier zusätzlich die Korrektur des Mischungsfehlers, der diesem Mischertyp normalerweise zu eigen ist. Dabei vergrößert sich der Einfluß der Nocke 21 auf die Komfortzone beim Schließen ständig, wodurch die dem System normalerweise eigene Verkleinerung der Komfortzone beim Schließen aufgehoben wird. Zu diesem Zweck ist. wie bereits erwähnt, die Höhe h der Nocke 21 gleich oder näherungsweise gleich der Überdeckung Ü.

## Patentansprüche

1. Ventilscheibenpaket (1) eines Steuerventils einer sanitären Einhebel-Mischarmatur, mit wenigstens einer eine Kaltwasserzuflußöffnung (3) und eine Heißwasserzuflußöffnung (4) aufweisenden ersten Ventilscheibe (2) und einer gegenüber der ersten Ventilscheibe (2) bewegbaren, eine Mischwässersteueröffnung (6) aufweisenden zweiten Ventilscheibe (1), wobei durch Bewegen der zweiten Ventilscheibe (5) gegenüber der ersten Ventilscheibe (2) zumindest zur Veränderung der Mischwassertemperatur unterschiedliche Einströmquerschnitte der Kaltwasserzuflußöffnung (3) und der Heißwasserzuflußöffnung (4) über die Mischwassersteueröffnung (6) einstellbar sind, wobei die zweite Ventilscheibe (5) gegenüber der ersten Ventilscheibe (2) um die Mittelachse (M) der ersten Ventilscheibe (2) verdrehbar ist, wobei wenigstens eine in die Mischwassersteueröffnung (6) hineinragende Nocke (7) vorgesehen ist, die bei Verstellung der zweiten Ventilscheibe (5) ausgehend von der Mittelstellung zumindest im Bereich der Mittelstellung die eine Zuflußöffnung stärker überdeckt als die andere Zuflußöffnung, **dadurch gekennzeichnet**, daß die Höhe (h) der Nocke (7) zumindest der Breite (B) der Kaltwasserzuflußöffnung (3) und/oder der Heißwasserzuflußöffnung (4) entspricht, so daß die Nocke (7) in maximaler Öffnungsstellung die gesamte Breite (B) der Kaltwasserzuflußöffnung (3) und/oder der Heißwasserzuflußöffnung (4) überdeckt.

2. Ventilscheibenpaket nach Anspruch 1, dadurch gekennzeichnet, daß die Kaltwasserzuflußöffnung (3) und die Heißwasserzuflußöffnung (4) über einen Steg (18) mit einem Abstand (A) voneinander beabstandet sind und daß die Breite (b) der Nocke (7) kleiner gleich dem Abstand (A) ist.

3. Ventilscheibenpaket (14) eines Steuerventils einer sanitären Einhebel-Mischarmatur, mit wenigstens einer eine Kaltwasserzuflußöffnung (16) und eine Heißwasserzuflußöffnung (17) aufweisenden ersten Ventilscheibe (15) und einer gegenüber der ersten Ventilscheibe (15) bewegbaren, eine Mischwassersteueröffnung (20) aufweisenden zweiten Ventilscheibe (19), wobei durch Bewegen der zweiten Ventilscheibe (19) gegenüber der ersten Ventilscheibe (15) zumindest zur Veränderung der Mischwassertemperatur unterschiedliche Einströmquerschnitte der Kaltwasserzuflußöffnung (16) und der Heißwasserzuflußöffnung (17) über die Mischwassersteueröffnung (20) einstellbar sind. wobei wenigstens eine in die Mischwassersteueröffnung (20) hineinragende Nocke (7) vorgesehen ist. die bei Verstellung der zweiten Ventilscheibe (19) die eine Zuflußöffnung stärker überdeckt als die andere Zuflußöffnung, **dadurch gekennzeichnet**, daß die zweite Ventilscheibe (19) in der Offen- und Geschlossen-Stellung um einen außermittigen Drehpunkt (D) der zweiten Ventilscheibe (19) verdrehbar ist und daß die Nocke (21) durch einen Kreisbogen um den Drehpunkt (D) der zweiten Ventilscheibe (19) begrenzt wird.

4. Ventilscheibenpaket nach Anspruch 3, dadurch gekennzeichnet, daß die Kaltwasserzuflußöffnung (16) und die Heißwasserzuflußöffnung (17) über einen Steg (18) mit einem Abstand (A) voneinander beabstandet sind und daß die Breite (b) der Nocke (21) größer ist als der Abstand (A).

5. Ventilscheibenpaket nach Anspruch 3 oder 4, dadurch gekennzeichnet, daß die erste Steuerscheibe (15) und die zweite Steuerscheibe (19) in der Geschlossen-Stellung im Bereich außerhalb der Nocke (21) sich überdecken und eine Überdeckung (Ü) aufweisen.

6. Ventilscheibenpaket nach einem der Ansprüche 3 bis 5. dadurch gekennzeichnet, daß die maximale Höhe (h) der Nocke (21) kleiner ist als die Breite (B) der Kaltwasserzuflußöffnung (16) und/oder der Heißwasserzuflußöffnung (17).

7. Ventilscheibenpaket nach einem der Ansprüche 1 bis 6, dadurch gekennzeichnet. daß die zweite Ventilscheibe (5, 19) gegenüber der ersten Ventilscheibe (2, 15) zur Temperatursteuerung verdrehbar ist und daß, vorzugsweise, die zweite Ventilscheibe (5, 19) gegenüber der ersten Ventilscheibe (2, 15) zur Mengensteuerung verschiebbar ist.

8. Steuerventil mit einem Ventilscheibenpaket (1, 14) nach einem der vorhergehenden Ansprüche.

9. Sanitäre Einhebel-Mischarmatur mit einem Ventilscheibenpaket (1, 14) nach einem der vorhergehenden Ansprüche.

## Claims

1. A valve disc assembly (1) of a control valve for a sanitary single-lever mixer tap, having at least one first valve disc (2), which comprises a cold water inflow aperture (3) and a hot water inflow aperture (4), and having a second valve disc (5) which can move in relation to the first valve disc (2) and which comprises a mixed water control aperture (6), wherein different inflow cross-sections of the cold water inflow aperture (3) and of the hot water inflow aperture (4) can be set, at least for changing the mixed water temperature, via the mixed water control aperture (6) by moving the second valve disc (5) in relation to the first valve disc (2), wherein the second valve disc (5) can be turned in relation to the first valve disc (2) about the centre line (M) of the first valve disc (2), wherein at least one projection (7) is provided, which protrudes into the mixed water aperture (6), and which when the second valve disc (5) is adjusted starting from the middle position covers one inflow aperture to a greater extent than it covers the other inflow aperture, at least in the region of the middle position, **characterised in that** the height (h) of the projection (7) at least corresponds to the width (B) of the cold water inflow aperture (3) and/or of the hot water inflow aperture (4), so that in the position of maximum opening the projection (7) covers the entire width (B) ofthe cold water inflow aperture (3) and/or of the hot water inflow aperture (4).

2. A valve disc assembly according to claim 1, characterised in that the cold water inflow aperture (3) and the hot water inflow aperture (4) are spaced apart from each other at a distance (A) via a bridge (18) and that the width (b) of the projection (7) is less than or equal to the distance (A).

3. A valve disc assembly (14) of a control valve for a sanitary single-lever mixer tap, having at least one first valve disc (15), which comprises a cold water inflow aperture (16) and a hot water inflow aperture (17), and having a second valve disc (19) which can move in relation to the first valve disc (15) and which comprises a mixed water control aperture (20), wherein different inflow cross-sections of the cold water inflow aperture (16) and of the hot water inflow aperture (17) can be set via the mixed water control aperture (20), at least for changing the mixed water temperature, by moving the second valve disc (19) in relation to the first valve disc (15), wherein at least one projection (7) is provided, which protrudes into the mixed water aperture (20) and which when the second valve disc (19) is adjusted covers one inflow aperture to a greater extent than it covers the other inflow aperture, **characterised in that** in the open and closed positions the second valve disc (19) can be turned about an off-centre centre of rotation (D) of the second valve disc (19) and that the projection (21) is delimited by a circular arc about the centre of rotation (D) of the second valve disc (19).

4. A valve disc assembly according to claim 3, characterised in that the cold water inflow aperture (16) and the hot water inflow aperture (17) are spaced apart from each other at a distance (A) via a bridge (18) and that the width (b) of the projection (21) is greater than the distance (A).

5. A valve disc assembly according to claims 3 or 4, characterised in that in the closed position the first control disc (15) and the second control disc (19) overlap each other in the region outside the projection (21) and have an overlap (Ü).

6. A valve disc assembly according to any one of claims 3 to 5, characterised in that the maximum height (h) of the projection (21) is less than the width (B) of the cold water inflow aperture (16) and/or of the hot water inflow aperture (17).

7. A valve disc assembly according to any one of claims 1 to 6, characterised in that the second valve disc (5, 19) can be turned in relation to the first valve disc (2, 15) in order to control the temperature, and that the second valve disc (5, 19) can preferably be displaced in relation to the first valve disc (2, 15) in order to control the flow rate.

8. A control valve comprising a valve disc assembly (1, 14) according to any one of the preceding claims.

9. A sanitary single-lever mixer tap comprising a valve disc assembly (1, 14) according to any one of the preceding claims.

## Revendications

1. Paquet de disques de soupape (1) d'une soupape de commande d'un mitigeur sanitaire à monocommande, comprenant au moins un premier disque de soupape (2) présentant une ouverture d'amenée de l'eau froide (3) et une ouverture d'amenée de l'eau chaude (4), et un second disque de soupape (5) mobile par rapport au premier disque de soupape (2), présentant une ouverture de commande (6) pour l'eau mixte, dans lequel, en déplaçant le second disque de soupape (5) par rapport au premier disque de soupape (2), au moins pour la modification de la température de l'eau mixte, on peut régler des sections transversales d'admission différentes de l'ouverture d'amenée de l'eau froide (3) et de l'ouverture d'amenée pour l'eau chaude (4) via l'ouverture de commande pour l'eau mixte (6), dans lequel on peut faire tourner le second disque de soupape (5) par rapport au premier disque de soupape (2) autour de l'axe central (M) du premier disque de soupape (2), -dans lequel on prévoit au moins une came (7) faisant saillie dans l'ouverture de commande de l'eau mixte (6), qui, lors du déplacement du second disque de soupape (5) à partir de la position médiane, au moins dans la zone de la position médiane, recouvre plus fortement la première ouverture d'amenée que l'autre ouverture d'amenée, caractérisé en ce que la hauteur (h) de la came (7) correspond au moins à la largeur (B) de l'ouverture d'amenée de l'eau froide (3) et/ou de l'ouverture d'amenée de l'eau chaude (4), si bien que la came (7), dans la position d'ouverture maximale, recouvre toute la largeur (B) de l'ouverture d'amenée de l'eau froide (3) et/ou de l'ouverture d'amenée de l'eau chaude (4).

2. Paquet de disques de soupape selon la revendication 1, caractérisé en ce que l'ouverture d'amenée de l'eau froide (3) et l'ouverture d'amenée de l'eau chaude (4) sont écartées l'une de l'autre via une traverse (18) sur une distance (A), et en ce que la largeur (b) de la came (7) est égale ou inférieure à la distance (A).

3. Paquet de disques de soupape (14) d'une soupape de commande d'un mitigeur sanitaire à monocommande, comprenant au moins un premier disque de soupape (15) présentant une ouverture d'amenée de l'eau froide (16) et une ouverture d'amenée de l'eau chaude (17), et un second disque de soupape (19) mobile par rapport au premier disque de soupape (15), présentant une ouverture de commande (20) pour l'eau mixte, dans lequel, en déplaçant le second disque de soupape (19) par rapport au premier disque de soupape (15), au moins pour la modification de la température de l'eau mixte, on peut régler des sections transversales d'admission différentes de l'ouverture d'amenée de l'eau froide (16) et de l'ouverture d'amenée de l'eau chaude (17) via l'ouverture de commande pour l'eau mixte (20), dans lequel on prévoit au moins une came (21) faisant saillie dans l'ouverture de commande pour l'eau mixte (20), qui, lors du déplacement du second disque de soupape (19) recouvre plus fortement la première ouverture d'amenée que l'autre ouverture d'amenée, caractérisé en ce qu'on peut faire tourner le second disque de soupape (19) dans la position d'ouverture et de fermeture autour d'un centre de rotation décentré (D) du second disque de soupape (19), et en ce que la came (21) est délimitée par un arc de cercle autour du centre de rotation (D) du second disque de soupape (19).

4. Paquet de disques de soupape selon la revendication 3, caractérisé en ce que l'ouverture d'amenée de l'eau froide (16) et l'ouverture d'amenée de l'eau chaude (17) sont écartées l'une de l'autre via une traverse (18) sur une distance (A), et en ce que la largeur (b) de la came (21) est égale ou inférieure à la distance (A).

5. Paquet de disques de soupape selon la revendication 3 ou 4, caractérisé en ce que le premier disque de commande (15) et le second disque de commande (19) dans la position de fermeture se recouvrent dans la zone extérieure à la came (21) et présentent un recouvrement (Ü).

6. Paquet de disques de soupape selon l'une quelconque des revendications 3 à 5, caractérisé en ce que la hauteur maximale (h) de la came (21) est inférieure à la largeur (B) de l'ouverture d'amenée de l'eau froide (16) et/ou de l'ouverture d'amenée de l'eau chaude (17).

7. Paquet de disques de soupape selon l'une quelconque des revendications 1 à 6, caractérisé en ce qu'on peut faire tourner le second disque de soupape (5, 19) par rapport au premier disque de soupape (2, 15) pour le réglage de la température et en ce que, de préférence, on peut déplacer le second disque de soupape (5, 19) par rapport au premier disque de soupape (2, 15) pour le réglage de la quantité.

8. Soupape de commande comprenant un paquet de disques de soupape (1, 14) selon l'une quelconque des revendications précédentes.

9. Mitigeur sanitaire à monocommande comprenant un paquet de disques de soupape (1, 14) selon l'une quelconque des revendications précédentes.
